# EUROPÄISCHE PATENTANMELDUNG

(11) **EP 4 333 262 A1**
(43) Veröffentlichungstag der Anmeldung: **06.03.2024**
(21) Anmeldenummer: 22193218.9
(22) Anmeldetag: 31.08.2022
(51) Int. Cl.: H02K 1/02, H02K 15/02

(54) **ADDITIV HERGESTELLTES MAGNETBLECH, BLECHPAKET UND VERFAHREN ZUR HERSTELLUNG EINES MAGNETBLECHS**

(71) Anmelder: Siemens Aktiengesellschaft, 80333 München (DE)
(72) Erfinder: Schuh, Carsten, 85598 Baldham (DE); Vollmer, Rolf, 36129 Gersfeld (DE)
(74) Vertreter: Siemens Patent Attorneys

(57) **Zusammenfassung**

Die Erfindung betrifft ein additiv hergestelltes rotationssymmetrisches Magnetblech (2), umfassend mindestens zwei Materiallagen 4, 6, für ein Blechpaket (8) einer elektrischen Maschine (10), wobei in jeder Materiallage 4, 6 mindestens zwei in planarer Erstreckung voneinander getrennte Materialkomponenten (12, 14) vorliegen
- eine erste Materialkomponente (12) und eine zweite Materialkomponente (14) wobei
-die Materialkomponenten 12, 14 dabei ein Materiallagen-Layout 16 bilden
dadurch gekennzeichnet, dass
- die mindestens zwei Materiallagen 4, 6 das gleiche Materiallagen-Layout 16 der beiden Materialkomponenten 12, 14 aufweisen
und das Layout 16 der mindestens zwei Materiallagen 4, 6 um einen Winkel α rotatorisch verschoben ist.

## Beschreibung

Die Erfindung betrifft ein additiv hergestelltes Magnetblech nach dem Patentanspruch 1, ein Blechpaket nach Patentanspruch 12 sowie Verfahren zur Herstellung eines Magnetblechs nach Patentanspruch 15.

Ein neues Verfahren zur Herstellung von Magnetblechen für elektrische Maschinen stellt der Sieb- oder der Schablonendruck dar. Hierbei wird mittels einer Schablone, bei der die offenen Bereiche auch mit einem Sieb versehen sein können, eine Druckpaste auf ein Substrat gedruckt. Man spricht hierbei von Schablonendruck oder Siebdruck, wobei der Schablonendruck ein Oberbegriff des Siebdrucks ist. Die Druckpaste enthält neben Lösungsmitteln und / oder Bindemitteln Metallpulver, die funktional im späteren Bauteil wirken. Durch die Siebdrucktechnik wird ein Grünkörper hergestellt, der nach einer weiteren thermischen Behandlung zunächst in der Regel entbindert wird und anschließend bei einer höheren Temperatur einem Sinterprozess zugeführt wird, wobei die metallischen Pulverkörner so miteinander versintern, dass ein strukturiertes Blech, das Magnetblech, entsteht.

Zur Erzielung einer höheren mechanischen Festigkeit solcher Bleche, insbesondere bei hohen Drehzahlen von Rotoren elektrischer Maschinen, gewinnt nun die Herstellbarkeit von Zweikomponenten-Magnetblechen immer mehr an Bedeutung. Ein Beispiel hierfür ist in der EP 3723249 A1 beschrieben. Ferner seien hierbei noch die EP 3 629 453 A1, EP 3 932 591 A1 und die EP 3 725 435 A1 zu nennen. Ein grundsätzliches Problem bei derartigen Zweikomponenten-Magnetblechen, die im Schablonendruckverfahren hergestellt werden, besteht darin, dass die unterschiedlichen Materialien, wenn sie einerseits gute magnetische Eigenschaften haben und auf der anderen Seite eine hohe Festigkeit aufweisen, in der Regel unterschiedliche thermische Ausdehnungskoeffizienten aufweisen. So hat beispielsweise ein hochfester Stahl, der zur mechanischen Festigkeit des Magnetblechs eine Teilkomponente darstellt, einen Ausdehnungskoeffizienten von 16 x 10-6 K-1. Ein weiterer weichmagnetischer Werkstoff hat dabei in einer Temperaturspanne zwischen 0 und 100° C einen thermischen Ausdehnungskoeffizienten, der zwischen 10 - 12 x 10-6 K-1 liegt. Bei der gemeinsamen Sinterung derartig unterschiedlicher Materialkomponenten bzw. Materialpaarungen in einem Grünkörper zu einem Magnetblech kommt es insbesondere bei der Abkühlung von den Sintertemperaturen zur Raumtemperatur aufgrund dieser unterschiedlichen thermischen Ausdehnungskoeffizienten zur Ausbildung von hohen mechanischen Spannungen in den Verbindungs- bzw. Nahtbereichen zwischen diesen Materialkomponenten. Dies kann zu Verwölbungen oder zu Rissen oder insgesamt zu mechanischen Spannungen im Magnetblech führen, die die mechanischen oder magnetischen Eigenschaften deutlich verschlechtern können.

Die Aufgabe der Erfindung besteht darin, ein Magnetblech bereitzustellen, sowie daraus ein Blechpaket und eine elektrische Maschine zu generieren, bei denen das Magnetblech gegenüber dem Stand der Technik bei Anwendung von mindestens zwei Materialkomponenten innerhalb des Magnetblechs eine höhere Festigkeit sowie weniger intrinsische Spannungen aufweist.

Die Lösung der Aufgabe besteht in einem Blechpaket nach Patentanspruch 12 sowie in einem Verfahren zur Herstellung eines Magnetbleches nach Patentanspruch 15.

Das additiv hergestellte rotationssymmetrische Magnetblech nach Patentanspruch 1 umfasst zumindest zwei Materiallagen und das Magnetblech dient als Bestandteil eines Blechpaketes einer elektrischen Maschine, wobei in jeder Materiallage des Magnetblechs mindestens zwei in planarer Erstreckung voneinander getrennte Materialkomponenten vorliegen. Dabei handelt es sich um eine erste Materialkomponente und um eine zweite Materialkomponente, die gemeinsam ein Materiallagenlayout bilden. Die Erfindung zeichnet sich dadurch aus, dass mindestens zwei Materiallagen das gleiche Materiallagenlayout der beiden Materialkomponenten aufweisen. Dabei sind die Layouts mindestens zweier Materiallagen um einen Winkel α rotatorisch zueinander verschoben. Rotatorisch bedeutet dabei um eine Lotachse zur Blechebene, die durch den Mittelpunkt des rotationssymmetrischen Magnetblechs verläuft.

Die vorliegende Erfindung unterscheidet sich vom Stand der Technik, nach dem gedruckte Zweikomponenten-Magnetbleche jeweils aus einer singulären Materiallage aufgebaut sind, zunächst darin, dass dieses hier vorliegende Magnetblech aus mehreren Materiallagen zusammengesetzt ist. Diese sind dabei übereinander in einem Stapel angeordnet. Zum anderen unterscheidet sich das vorliegende Magnetblech darin vom Stand der Technik, dass mindestens zwei Materiallagen jeweils das gleiche Layout der beiden Materialkomponenten aufweisen und um einen Winkel α jeweils zueinander rotatorisch verschoben sind. In der Regel werden mehr als zwei Materiallagen mit demselben Layout übereinander angeordnet. Dies erfolgt bevorzugt durch ein Schablonendruck- oder Siebdruckverfahren, wobei diese Lagen bei dem beschriebenen Magnetblech jeweils zur darunter folgenden Lage eine rotatorische Verschiebung um den Winkel α aufweisen. Die Verschiebung um den Winkel α summiert sich bei einer Mehrzahl von Materiallagen auf, sodass sich ein Überlappungsbereich bildet, in dem de facto ein mittlerer thermischer Ausdehnungskoeffizient vorliegt, der in seinem planaren Verlauf gradientenförmig verläuft und dabei jeweils zwischen den einzelnen thermischen Ausdehnungskoeffizienten der ersten und der zweiten Materialkomponente liegt. Dadurch werden die thermomechanischen Spannungen zwischen den Bereichen der einzelnen Materialkomponenten (insbesondere während des Abkühlens von Sintertemperatur) deutlich reduziert, was bei hohen Rotationsgeschwindigkeiten des Magnetbleches bzw. des daraus aufgebauten Blechpaketes eine höhere mechanische Festigkeit bewirkt.

Zum anderen hat sich noch in positiver Weise herausgestellt, dass durch den beschriebenen Aufbau Drehmomentschwankungen in der elektrischen Maschine, in dem das Magnetblech bzw. das daraus resultierende Blechpaket eingesetzt ist, in einem größeren Spektrum eliminiert werden können.

Es ist daher anzumerken, dass die beschriebenen Materiallagen, die entsprechend rotatorisch zueinander verdreht sind, integrale Bestandteile des jeweiligen siebgedruckten bzw. schablonengedruckten Magnetbleches sind. Es handelt sich bei den Materiallagen demnach nicht um eigene für sich genommene Magnetbleche, sondern die einzelnen Materiallagen sind bevorzugt durch eine Sinterverbindung, hervorgerufen durch einen Sinterprozess des gesamten Magnetbleches, miteinander verbunden und bilden so ein Magnetblech.

Dabei sollen im weiteren Verlauf folgende Definitionen verwendet werden: Das Magnetblech und die einzelnen Materiallagen gehen, wie noch bezüglich Patentanspruch 15 näher erläutert werden wird, aus einem Grünkörper hervor. Unter dem Grünkörper wird dabei ein Formkörper für eine spätere Wärmebehandlung verstanden, der in der Regel Bindemittel und/oder Lösungsmittel enthält, die der besseren Formgebung dienen. Ein Grünkörper ist an sich in der Regel mechanisch selbsttragend und mechanisch begrenzt belastbar. Ein von diesen Bindemitteln und/oder Lösungsmitteln befreiter Grünkörper wird in diesem Zusammenhang als Vorkörper bezeichnet. Der Vorkörper enthält die lediglich funktionalen Bestandteile, in der Regel Metallpartikel, des endgültigen Körpers, die auch aktiv am Sinterprozess teilhaben. Durch die Wärmebehandlung in Form eines Sintervorganges, bei dem anders als bei einem Schmelzvorgang einzelne Körner (Partikel) im Vorkörper über Diffusionsprozesse eine zusammenhängende, stofflich verbundene Struktur bilden, wird der Vorkörper in einen Sinterkörper überführt. Nach Durchführung des Sintervorgangs wird der daraus entstandene Körper in diesem Zusammenhang als Magnetblech bezeichnet. Dieses Magnetblech kann noch verschiedenen Nachbearbeitungen unterzogen werden.

Die beschriebenen Materiallagen werden zusammen dem Sinterprozess zugeführt und bilden auch in ihren planaren Grenzflächen eine Sinterverbindung aus.

Unter einem Schablonendruckverfahren wird ein Verfahren verstanden, bei dem eine Druckpaste beispielsweise mittels eines Rakels auf ein Substrat aufgebracht wird, wobei eine Schicht entsteht, die wie beschrieben, Lösungsmittel, Bindemittel und funktionale Partikel aufweist. Die Paste wird dabei nur auf bestimmte, nicht abgedeckte Bereiche, die mittels einer Schablone freigehalten sind, auf ein Substrat gedruckt. In der Regel wird die Paste dabei durch ein Sieb gedruckt, was aber nicht zwingend notwendig ist. Ein Schablonendruck unter Verwendung eines Siebes wird als Siebdruckverfahren bezeichnet, weshalb das Siebdruckverfahren unter das Schablonendruckverfahren begrifflich subsummiert wird. Bei der Verwendung des Begriffes Siebdruckverfahren wird jedoch auch der Oberbegriff Schablonendruckverfahren mitverstanden.

Üblicherweise weisen Magnetbleche im gesinterten Zustand eine Dicke zwischen 70 µm und 300 µm, insbesondere zwischen 100 µm und 250 µm auf. Das vorliegende Magnetblech weist hingegen eine Dicke auf, die zwischen bevorzugt 300 µm und 2.000 µm beträgt. Dieses resultiert aus den beschriebenen einzelnen Materiallagen, die wiederum für sich genommen dünner sind als ein übliches Magnetblech nach dem Stand der Technik und bevorzugt zwischen 10 µm und 100 µm dick sind. Dies führt dazu, dass für ein Magnetblech eine Anzahl zwischen 10 und 20 Materiallagen zweckmäßig ist. Hierbei ist zudem vorteilhaft, dass durch die größere Schichtdicke beim Grünkörper und beim späteren Sintervorgang höhere Festigkeiten und Steifigkeiten gegenüber Verwölbungen und Delaminierungen resultieren. Im Betrieb des Magnetbleches werden damit höhere mechanische Festigkeiten, insbesondere Zugfestigkeiten und Biegefestigkeiten bzw. Schwingfestigkeiten erzielt, was bei einem Rotor, dessen wesentlicher Bestandteil ein Blechpaket aus den beschriebenen Magnetblechen ist, so höhere Drehzahlen ermöglicht.

Das Magnetblech umfasst, wie beschrieben, mindestens zwei verschiedene Materialkomponenten, die sich insbesondere in ihren mechanischen und magnetischen Eigenschaften unterscheiden. Auf diese Weise kann gezielt in bestimmten Bereichen des Magnetbleches auf die dort benötigten technischen Eigenschaften eingegangen werden. Die erste Materialkomponente weist daher eine Eisenlegierung auf, die zu mindestens 25 Vol.% ein austenitisches Gefüge aufweist. Dieses austenitische Gefüge, das sich insbesondere durch hochlegierte Stähle erzielen lässt, weist eine sehr hohe Festigkeit, insbesondere Zug- und Biegefestigkeit auf.

Im Gegensatz dazu weist die zweite Materialkomponente eine Eisenlegierung auf, die mindestens 95 Gew.%, insbesondere mindestens 97 Gew.% Eisen umfasst. Bevorzugt handelt es sich bei der zweiten Materialkomponente um Reineisen, das sehr gute magnetische Eigenschaften, insbesondere weichmagnetische Eigenschaften aufweist und sich sehr gut in Form einer Hysterese ummagnetisieren lässt. Dabei sei darauf hingewiesen, dass die Angaben bezüglich des austenitischen Gefüges in Vol.% abgegeben werden und die Legierungsangaben in Gew.%. Dies liegt daran, dass sich Gefügestrukturen mikroskopisch in Schliffbildern anschaulicher in Vol.% angeben lassen und die Legierungsbestandteile im Weiteren in Gew.% angegeben werden, was technisch üblich ist und bei der Zusammensetzung einer Legierung eindeutige Herstellungsanweisungen darstellt.

Die zweite Materialkomponente, die sehr gute weichmagnetische Eigenschaften aufweist, weist dabei wiederum eine bevorzugte ferritische und/oder martensitische Gefügestruktur auf.

Die erste Materialkomponente, die die hohe mechanische Festigkeit aufweist und die Festigkeit des gesamten Magnetbleches bei rotatorischen Bewegungen gewährleistet, ist wiederum bevorzugt eine Eisen-Chrom-Nickel-Legierung. Diese weist wiederum bevorzugt einen Chromanteil auf, der zwischen 22 Gew.% und 28 Gew.%, insbesondere zwischen 24 Gew.% und 26 Gew.% beträgt. Ferner weist der Nickelanteil der beschriebenen Eisen-Chrom-Nickel-Legierung einen Anteil auf, der zwischen 4 Gew.% und 10 Gew.%, insbesondere zwischen 6 Gew.% und 8 Gew.% beträgt.

Ein weiterer Bestandteil der Erfindung ist ein Blechpaket für einen Rotor einer elektrischen Maschine, das eine Mehrzahl von Magnetblechen nach einem der vorhergehenden Ansprüche umfasst. Die Vorteile dieses Blechpaketes insbesondere als Bestandteil eines Rotors einer elektrischen Maschine sind bereits während der Vorteilsbeschreibung des einzelnen Magnetbleches eingehend beschrieben. Ein derartiges Blechpaket weist insbesondere eine höhere Toleranz gegenüber höheren Temperaturen auf, die bei hohen Drehzahlen auftreten, was einer Delaminierung eines Zweikomponenten-Magnetbleches, das insbesondere durch Siebdruck- oder Schablonendruckverfahren hergestellt ist, entgegenwirkt.

Da das beschriebene Blechpaket eine Mehrzahl von Magnetblechen mit den beschriebenen Eigenschaften aufweist, ist es zweckmäßig, den Aufbau des einzelnen Magnetbleches bei Übereinanderstapeln mehrerer Magnetbleche fortzusetzen, sodass bevorzugt eine oberste Materiallage eines ersten Magnetbleches und eine unterste Materiallage eines zweiten Magnetbleches jeweils auch um einen Winkel α zueinander verschoben sind. Die Winkelsumme der Winkel α in dem gesamten Blechpaket beträgt dabei zwischen 7° und 36°. Dieser Gesamtversatz ist zum einen dazu geeignet, einen ausreichend großen Überlappungsbereich eines jeden Magnetbleches bereitzustellen, um dort den thermischen Ausdehnungskoeffizienten zu reduzieren und andererseits dient dieser Gesamtwinkel auch dazu, Drehmomentschwankungen im Rotor mit einem möglichst breiten Spektrum zu eliminieren.

Ein weiterer Bestandteil der Erfindung ist das Verfahren zur Herstellung eines Magnetbleches, das folgende Schritte umfasst:
a) Aufbringen einer ersten Druckpaste mittels Schablonendruck durch eine Schablone auf ein Substrat
b) Aufbringen einer zweiten Druckpaste auf das Substrat, sodass die beiden Druckpasten nebeneinander vorliegen, eine diskrete Grenzlinie bilden und eine erste Materiallage ausbilden,
c) Trocknen der ersten Materiallage,
d) Verdrehen der Ausrichtung des Substrats und/oder der Schablone bezüglich einer Lotachse zum Substrat um einen Winkel α,
e) Aufbringen einer zweiten Materiallage nach den Schritten a) bis c),
f) Sintern eines durch die Schritte a) bis e) erzeugten Grünkörpers zu einem Magnetblech.

Das beschriebene Verfahren zur Herstellung eines Magnetbleches führt zu einem Magnetblech, das dieselben Vorteile aufweist, die bereits bezüglich des Patentanspruchs 1 und des Patentanspruchs 12 erläutert sind. Das Verdrehen der einzelnen Materiallagen, die abschließend das Magnetblech bilden, zueinander, führt dazu, dass in einem Überlappungsbereich zwischen den einzelnen Materialkomponenten eine jeweilige Versetzung um den beschriebenen Winkel α vorliegt und somit der thermische Ausdehnungskoeffizient sich gradientenförmig zwischen den Ausdehnungskoeffizienten der einzelnen Materialkomponenten angleicht. Dies wirkt sich positiv auf die Festigkeit des Magnetbleches aus.

Zur Erzielung des Winkels α kann einerseits das Substrat leicht verdreht werden, andererseits oder zusätzlich kann auch die Schablone bzw. der Rahmen der Schablone leicht um den Winkel α verdreht werden. Grundsätzlich sind natürlich auch Verdrehungen beider beschriebenen Komponenten möglich. Der Begriff, wonach die beiden Druckpasten nebeneinander vorliegen und eine diskrete Grenzlinie bilden, bedeutet, dass Überlappungen der beiden Druckpasten und gegebenenfalls ein Ineinanderfließen der beiden Druckpasten entlang der diskreten Grenzlinie gemäß einem verfahrenstechnischen Spielraum durchaus möglich sind und auch stattfinden. Die diskrete Grenzlinie sollte in der Praxis jedoch so eng wie möglich sein. Zwar ist ein Übergangsbereich zwischen den beiden Materialkomponenten ebenfalls im Hinblick auf die unterschiedlichen thermischen Ausdehnungskoeffizienten zweckmäßig, er führt jedoch zu unterschiedlichen Dicken im Bereich der Grenzlinie, was wiederum für den Aufbau des gesamten Magnetbleches weniger vorteilhaft ist.

Vorteilhafte Ausgestaltungsformen der Erfindung und weitere Merkmale werden anhand der folgenden Figuren näher beschrieben. Merkmale mit derselben Benennung, jedoch in unterschiedlichen Ausgestaltungsformen weisen dabei jeweils dasselbe Bezugszeichen auf. Es handelt sich dabei um rein schematische Darstellungen, die für sich genommen keine Einschränkung des Schutzbereichs darstellen. Dabei zeigen:
- Fig. 1: eine Explosionsdarstellung einer typischen elektrischen Maschine mit Gehäuse, Rotor und Stator, was ein Elektromotor oder ein Generator sein kann,
- Fig. 2: ein Blechpaket mit gestapelten Magnetblechen nach dem Stand der Technik,
- Fig. 3: eine Draufsicht auf ein zweikomponentiges Magnetblech,
- Fig. 4: eine perspektivische Draufsicht auf ein zweikomponentiges Magnetblech mit einem anderen Layout als in Figur 3,
- Fig. 5: eine vergrößerte Darstellung des Ausschnittes V in Figur 4,
- Fig. 6: eine vergrößerte Darstellung des Ausschnittes VI in Figur 5, in der ein Überlappungsbereich der einzelnen Materiallagen sichtbar ist,
- Fig. 7: eine schematische Darstellung eines Herstellungsverfahrens zu Herstellung des beschriebenen Magnetbleches.

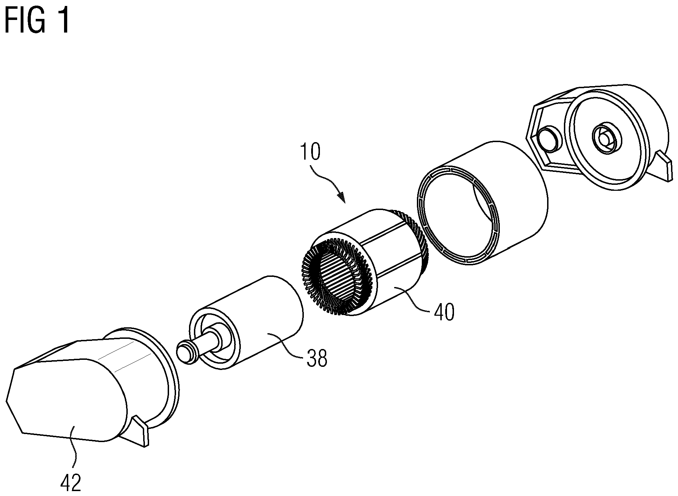

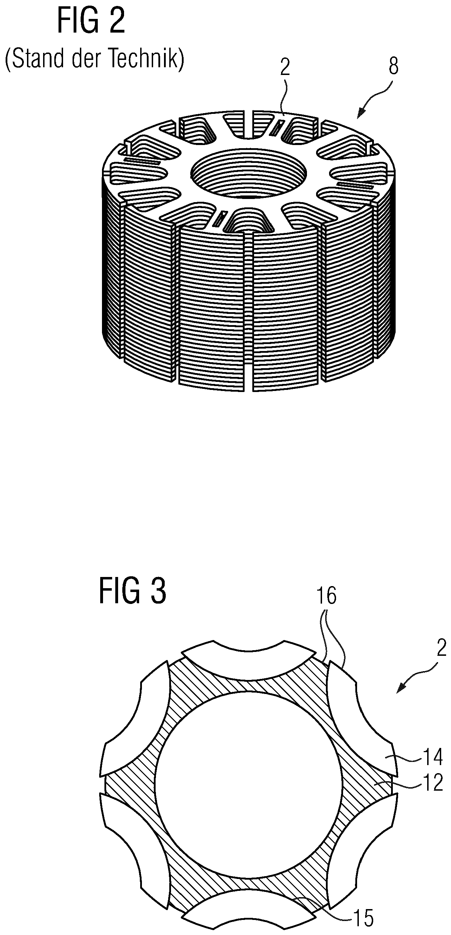

Zur besseren Einordnung des beschriebenen Magnetbleches 2 wird zunächst in Figur 1 eine Explosionsdarstellung einer elektrischen Maschine 10 gegeben. Diese umfasst einen Rotor 38 und einen Stator 40, die von einem Gehäuse 42 umgeben sind. Die elektrische Maschine 10 kann dabei ein Elektromotor oder auch ein Generator sein. Der Rotor 38 wiederum umfasst ein in Figur 1 nicht explizit dargestelltes Blechpaket 8, um das in bestimmter Weise elektrisch leitende Drähte als Spulen gelegt sind. Ein derartiges Blechpaket 8 gemäß dem Stand der Technik ist beispielweise in Figur 2 dargestellt. Das Blechpaket 8 nach Figur 2 weist einen Stapel einer Vielzahl von Magnetblechen 2 nach dem Stand der Technik auf, wobei das Layout der Fläche 2 so gestaltet ist, dass sich entsprechende Aussparungen und Nuten für die Leiterwicklungen ergeben.

In Figur 3 ist ein Beispiel für ein Magnetblech 2 gegeben, das zwei Komponenten aufweist, eine erste Materialkomponente 12 und eine zweite Materialkomponente 14. Dabei weisen die beiden Materialkomponenten 12 und 14 unterschiedliche technische Eigenschaften auf. Die erste Materialkomponente 12 umfasst insbesondere einen hochlegierten Chrom-Nickel-Stahl, der bevorzugt mehr als 25 Vol.% austenitisches Gefüge aufweist. Der Chromanteil weist dabei beispielsweise 25 Gew.% auf und der Nickelanteil liegt bei 7 Gew.%. Eine derartige Legierung ist eine Edelstahllegierung mit einer sehr hohen Festigkeit. Die erste Materialkomponente 12 ist, wie in Figur 3 zu erkennen, zentral im Inneren des Magnetblechs 2 angeordnet und trägt somit bei einer rotatorischen Bewegung am Rotor 38 die höchsten Zugbelastungen, die auf das Magnetblech 2, bzw. auf das daraus gebildete Blechpaket 8 wirken.

Die zweite Materialkomponente 14 hingegen ist bezüglich ihrer Werkstoffeigenschaften insbesondere auf die magnetischen Eigenschaften ausgerichtet. Das Material der zweiten Materialkomponente 14 ist im Idealfall aus Reineisen gebildet und weist dabei ein ferritisches oder martensitisches Gefüge auf. Reineisen weist dabei die besten weichmagnetischen Eigenschaften auf und lässt sich diesbezüglich leicht umpolarisieren. Dies ist bei Wechselstrommotoren oder Generatoren von Bedeutung.

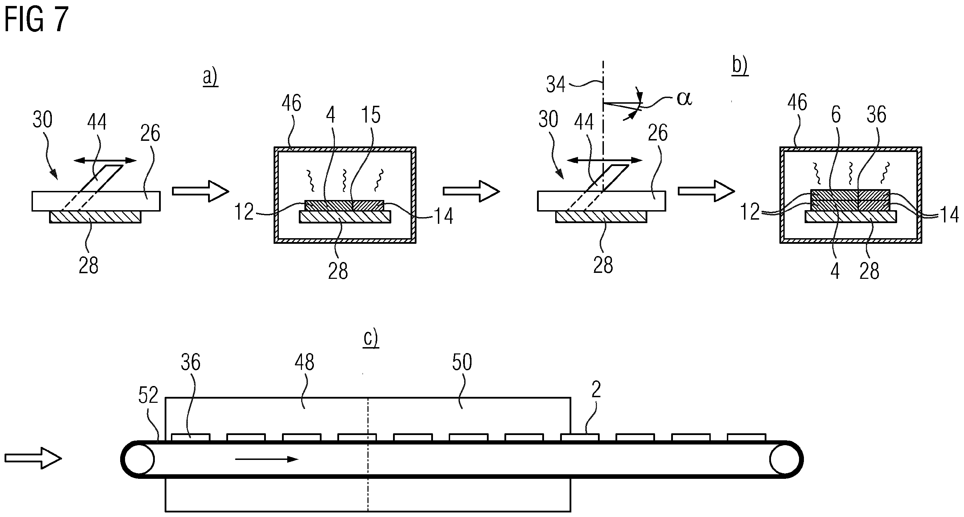

Die Herstellung eines Magnetbleches 2 aus mindestens zwei Komponenten, wie sie in Figur 3 dargestellt ist, wird anhand der schematischen Darstellung von Figur 7 noch erläutert werden.

Die beiden unterschiedlichen Materialkomponenten weisen, obwohl sie in der Regel aus Eisenlegierungen aufgebaut sind, dennoch einen gewissen Unterschied in ihrem elektrischen Ausdehnungskoeffizienten auf. Der Ausdehnungskoeffizient zwischen den einzelnen Eisenlegierungen kann je nach Legierungszusammensetzung beispielsweise zwischen 10 × 10⁻⁶ K⁻¹ und 20 × 10⁻⁶ K⁻¹ liegen. Hinzu kommt, dass eine Temperaturerhöhung von Raumtemperatur auf 200°C, was unter Umständen die Betriebstemperatur einer elektrischen Hochleistungsmaschine bei hohen Drehzahlen sein kann, ebenfalls zu einer Änderung des Ausdehnungskoeffizienten um 10 × 10⁻⁶ K⁻¹ führen kann. Dieser Unterschied zwischen den einzelnen Ausdehnungskoeffizienten je nach Materialzusammensetzung aber auch in Abhängigkeit vom Arbeitstemperaturbereich der Maschine führt zu erheblichen thermomechanischen Spannungen an der Grenzfläche 15 zwischen den einzelnen Materialkomponenten 12 und 14. Weitere hohe thermomechanische Spannungen treten bereits beim Abkühlen von den erforderlichen Sintertemperaturen auf.

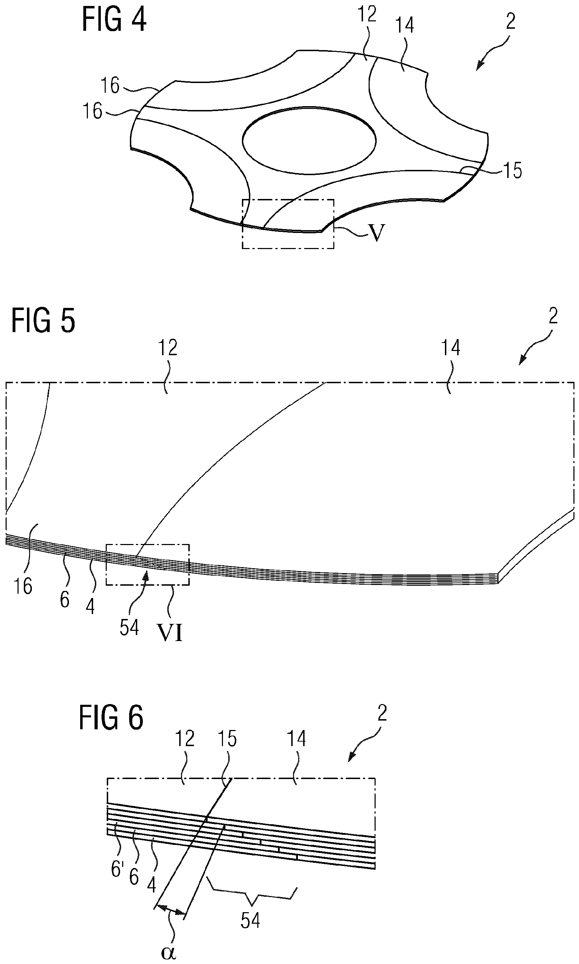

Eine vorteilhafte Lösung, wie diese thermomechanischen Spannungen, die durch die unterschiedlichen Ausdehnungskoeffizienten und durch die thermischen Schwankungen der Maschine hervorgerufen werden, reduziert werden können, wird anhand der Figuren 4 bis 6 erläutert. In Figur 4 ist analog zu Figur 3 ein Magnetblech 2 dargestellt, dass zwar gegenüber der Figur 3 ein verändertes Layout 16 aufweist, aber grundsätzlich dessen Aufbau entspricht. Es weist sowohl Bereiche mit der ersten Materialkomponente 12 und Bereiche mit der zweiten Materialkomponente 14 auf. Auch hier liegen Grenzflächen 15 zwischen den Materialkomponenten 12, 14 vor. In dem kreisförmigen Ausschnitt mit der Bezeichnung V treffen die beiden Materialkomponenten 12 bis 14 gemäß ihrer Grenzfläche 15 aneinander, was in der Figur 5 leicht vergrößert dargestellt ist. Hier ist wiederum in dem Kreis mit der Nummerierung VI zu erkennen, dass das Magnetblech 2 aus einer Mehrzahl von Materiallagen 4, 6, nämlich einer ersten Materiallage 4 und einer zweiten Materiallage 6 sowie weiterer Materiallagen 6' aufgebaut ist. Eine weitere Vergrößerung des Kreises VI ist in Figur 6 dargestellt.

Hier ist die Abfolge der Materiallagen 4, 6 noch einmal vergrößert und verdeutlicht dargestellt. Es ist zu erkennen, dass zwischen der ersten Materiallage 4 und der zweiten Materiallage 6 eine rotatorische Verdrehung des Layouts 16 der beiden Materiallagen, das im Übrigen weitgehend identisch ist, um einen Winkel α vorliegt. Diese Verdrehung um den Winkel α setzt sich bei den weiteren Materiallagen 6' und den darauffolgenden, nicht bezeichneten aber im Rahmen der Prozessgenauigkeit identischen Materiallagen 6' fort. Hieraus ergibt sich, wie in Figur 6 zu erkennen ist, ein Überlappungsbereich 54. Legt man einen Querschnitt durch den Überlappungsbereich 54 hindurch, so ergibt sich der gleiche Materialanteil an der ersten Materialkomponente 12 und der zweiten Materialkomponente 14. Dieser liegt jedoch in einem graduellen Verlauf der jeweiligen Materialkomponenten 12, 14 vor. Dieser Überlappungsbereich 54 weist somit einen thermischen Ausdehnungskoeffizienten auf, der sich gradientenförmig von dem der ersten Materiallage 12 zu dem der zweiten Materiallage 14 hin verändert. Dies wiederum bewirkt, dass thermomechanische Spannungen, die aus den unterschiedlichen Basiskoeffizienten der einzelnen Materialkomponenten 12 und 14 resultieren, reduziert werden. Es erfolgt somit ein gradueller Übergang der Ausdehnungskoeffizienten von der einen Materialkomponente zur anderen Materialkomponente. Lokale thermomechanische Spannungen werden hierdurch sehr stark reduziert bzw. über einen größeren Bereich verteilt, was wiederum die Festigkeit des Magnetbleches an sich deutlich erhöht.

Das in Figur 6 dargestellte Magnetblech 2 weist sechs Materiallagen 4, 6, 6' auf. Das Magnetblech 2 gemäß Figur 6 hat eine Dicke von 600 µm, jede der einzelnen Materiallagen 4, 6, 6' weist abhängig von den Herstellungstoleranzen eine Dicke von ca. 100 µm auf. Grundsätzlich ist es zweckmäßig, dass ein Magnetblech 2, das entsprechend der in den Figuren 4 bis 6 dargestellten Weise aufgebaut ist, eine Dicke zwischen 300 µm und 2.000 µm aufweist. Magnetbleche, die nach herkömmlichen Verfahren des Siebdruckes bzw. des Schablonendruckes hergestellt sind, liegen üblicherweise in einer Dicke von 100 µm vor. Gegenüber diesen Blechen weist das Magnetblech 2 in der hier dargestellten Form den Vorteil auf, dass es zwar auch einzelne Materialkomponenten aufweist, die durch Sinterprozesse miteinander verbunden sind, die aber durch ihre Stapelfolge dazu führen, dass das gesamte Magnetblech 2 eine höhere relative Eigenfestigkeit aufweist und sich weniger durch Wölbungen während des Sinterprozesses verzieht.

Es kann im Weiteren zweckmäßig sein, dass entsprechend ausgestaltete Magnetbleche 2 so in einem Blechpaket 8 übereinandergestapelt werden, dass der Versatz um den Winkel α, wie er in Figur 6 dargestellt ist, beim Übereinanderstapeln der Magnetbleche 2 fortgesetzt wird, sodass sich der Winkelversatz um die einzelnen Winkel α aufsummiert. Dies wiederum hat Auswirkungen auf das magnetische Verhalten des Blechpaketes 8 und des Rotors 38. Es hat sich herausgestellt, dass ein Versatz der aufsummierten Winkel α zwischen 7,2° und 36° zweckmäßig ist, was abhängig von der Polpaarzahl des Motors ist. Bei einer hohen Polpaarzahl von 50 ist ein kleinerer Versatz des summierten Winkels α von 7,2° zweckmäßig, um Drehmomentschwankungen im Rotor auszugleichen. Bei einer geringen Polpaarzahl von 10 ist ein Winkel von 36° zweckmäßig, bei einer Polpaarzahl von 36 ist eine Winkelsumme, die auch als Schrägung bezeichnet wird, von 10° zweckmäßig.

In Figur 7 ist ein möglicher Verfahrensablauf beschrieben, in dem ein Magnetblech 2, das vorhergehend beschrieben ist, dargestellt werden kann. Dieser Verfahrensablauf ist in Figur 7 sehr schematisch beschrieben und es kann für die einzelnen Verfahrensschritte technisch übliche Variationen geben. Zunächst wird mittels eines Schablonendruckverfahrens 30 und mit Hilfe einer Schablone 26 mit Hilfe eines Rakels 44 eine hier nicht dargestellte Druckpaste auf ein Substrat 28 gedruckt. Im Weiteren, in Figur 7a nicht separat dargestellt, wird die Schablone gewechselt oder ausgetauscht und es wird eine zweite Druckpaste auf dasselbe Substrat 28 gedruckt, sodass die zwei Materialkomponenten 12 und 14 nebeneinander auf dem Substrat 28 vorliegen. Im weiteren Verlauf der Beschreibung des Verfahrens wird für die einzelnen Materialkomponenten bereits der Begriff erste Materialkomponente 12 und zweite Materialkomponente 14 verwendet, wobei dies streng genommen noch Vorstufen der späteren, im Magnetblech vorliegenden Materialkomponenten 12 und 14 sind. Bei der Darstellung gemäß Figur 7a handelt es sich somit bei den Materialkomponenten 12 und 14 um die getrockneten Pasten, die mittels einer Trocknungsvorrichtung von Lösungsmitteln befreit werden.

Gemäß Figur 7b erfolgt ein zweiter Schritt mittels des gleichen Schablonendruckverfahrens 30, wobei auf dasselbe Substrat 28, und zwar auf die bereits vorhandenen und getrockneten Materialkomponenten 12 und 14, die die erste Materiallage 4 bilden, eine zweite Materiallage 6 mit demselben Layout 16 gedruckt wird. Es erfolgt ein weiterer Trocknungsprozess.

Die zweite Materiallage 6 unterscheidet sich von der ersten Materiallage 4 in hier nicht sichtbarer Form darin, dass die Schablone 26 und/oder das Substrat 28 um die Lotachse 34 auf das Substrat 28 um den Winkel α verdreht wurde.

Bevorzugt folgt zum Aufbau des Magnetbleches 2 bzw. dessen Grünkörper 36 noch eine Mehrzahl von weiteren, hier nicht dargestellten Materiallagen, die ebenfalls um einen weiteren Winkel α in ihrem Layout bezüglich der jeweiligen unteren Materiallage verdreht werden.

Hierbei kann zwischen die einzelnen Materiallagen Hilfsstoffe eingebracht werden. Hierzu kommen beispielsweise Bor, Lithium, Phosphor in Frage, die zu einem temporären Flüssigphasensintern im Grenzbereich beitragen und die anschließend durch Resorption in das Gefüge eingebaut werden. Dies führt zu einer verbesserten Anbindung der Materiallage zueinander nach dem Sinterprozess und verhindert ein etwaiges Delaminieren der Materiallagen. Diese Hilfsstoffe können beispielsweise durch ein Sprühverfahren nach dem Trocknen der jeweiligen Materiallagen aufgebracht werden.

Dieser so dargestellte Grünkörper 36 wird im Weiteren einem Sinterprozess zugeführt. Hierzu ist ein Sinterofen zweckmäßig, der häufig in Form eines Chargenofens ausgestaltet ist, in dem eine Vielzahl von zu sinternden Bauteilen eingebracht wird und bis auf eine Sintertemperatur aufgeheizt wird und im Weiteren wieder abgekühlt wird.

In Figur 7c ist jedoch eine vorteilhafte Ausgestaltung aufgezeigt, wobei die Grünkörper 36 über ein Förderband 52 in einen Durchlaufofen geführt werden, wobei sich dieser in zwei Teilbereiche unterteilt, in einen Entbinderungsofen 48, wobei zunächst organische Bestandteile aus dem Grünkörper 36 thermisch zersetzt und entfernt werden, und in einen Sinterofen 50, in dem der Grünkörper auf eine Sintertemperatur aufgeheizt wird, bei der Diffusionsprozesse zwischen den einzelnen Partikeln der durch den Schablonendruck aufgebrachten Materialkomponenten stattfinden. Beim Verlassen des Sinterofens 50 werden die Bauteile als Magnetblech 2 bezeichnet. Diese haben dann die Ausgestaltungformen, wie sie beispielhaft in den Figuren 4 bis 6 dargestellt sind.

## Patentansprüche

1. Additiv hergestelltes rotationssymmetrisches Magnetblech (2), umfassend mindestens zwei Materiallagen 4, 6, für ein Blechpaket (8) einer elektrischen Maschine (10), wobei in jeder Materiallage 4, 6 mindestens zwei in planarer Erstreckung voneinander getrennte Materialkomponenten (12, 14) vorliegen
- eine erste Materialkomponente (12) und eine zweite Materialkomponente (14), wobei
- die Materialkomponenten 12, 14 dabei ein MateriallagenLayout 16 bilden
**dadurch gekennzeichnet, dass**
- die mindestens zwei Materiallagen 4, 6 das gleiche Materiallagen-Layout 16 der beiden Materialkomponenten 12, 14 aufweisen
und das Layout 16 der mindestens zwei Materiallagen 4, 6 um einen Winkel α rotatorisch verschoben ist.

2. Magnetblech nach Anspruch 1, **dadurch gekennzeichnet, dass** mindestens drei Materiallagen 4, 6, 6' vorgesehen sind, wobei eine dritte Materiallage 6' bezüglich einer zweiten Materiallage 6 ebenfalls rotatorisch in dieselbe Richtung um den Winkel a verschoben ist.

3. Magnetblech nach einem der Ansprüche 1 oder 2, **dadurch gekennzeichnet, dass** die mindestens zwei Materiallagen 4, 6 durch eine Sinterverbindung miteinander verbunden sind.

4. Magnetblech nach einem der vorhergehenden Ansprüche, **dadurch gekennzeichnet, dass** eine Dicke 18 des Magnetblechs 2 zwischen 300 µm und 2000 µm beträgt.

5. Magnetblech nach einem der vorhergehenden Ansprüche, **dadurch gekennzeichnet, dass** die Materiallagen 4, 6 eine Dicke aufweisen, die zwischen 10 µm und 150 µm beträgt.

6. Magnetblech nach einem der Ansprüche 1 bis 5, bei dem die erste Materialkomponente (12) eine Eisenlegierung umfasst, die zu mindestens 25 Vol. % ein austenitisches Gefüge aufweist.

7. Magnetblech nach einem der Ansprüche 1 bis 6, **dadurch gekennzeichnet, dass** die zweite Materialkomponente (14) eine Eisenlegierung umfasst, die mindestens 95 Gew. %, insbesondere mindestens 97 Gew. % Eisen, umfasst.

8. Magnetblech nach Anspruch 7, **dadurch gekennzeichnet, dass** die zweite Materialkomponente (14) eine ferritische oder martensitische Gefügestruktur aufweist.

9. Magnetblech nach einem der Ansprüche 1 bis 8, **dadurch gekennzeichnet, dass** die erste Materialkomponente (12) eine Eisen-Chrom-Nickel-Legierung ist.

10. Magnetblech nach Anspruch 9, **dadurch gekennzeichnet, dass** die erste Materialkomponente (12) eine Eisen-Chrom-Legierung ist, mit einem Chromanteil, der zwischen 22 Gew. % und 28 Gew. %, insbesondere zwischen 24 Gew. % und 26 Gew. % beträgt.

11. Magnetblech nach Anspruch 9 oder 10, **dadurch gekennzeichnet, dass** die erste Materialkomponente (12) einen Nickelanteil aufweist, der zwischen 4 Gew. % und 10 Gew. %, insbesondere zwischen 6 Gew. % und 8 Gew. % beträgt.

12. Blechpaket für einen Rotor (38) einer elektrischen Maschine (10), umfassend eine Mehrzahl von Magnetblechen (2) nach einem der Ansprüche 1 bis 11.

13. Blechpaket nach Anspruch 12, **dadurch gekennzeichnet, dass** eine oberste Materiallage eines ersten Magnetblechs und eine unterste Materiallage eines zweiten Magnetblechs um den Winkel α verschoben sind.

14. Blechpaket nach einem der vorhergehenden Ansprüche, **dadurch gekennzeichnet, dass** die Summe der Winkel α in dem Blechpaket 8 zwischen 7° und 36 ° beträgt.

15. Verfahren zu Herstellung eines Magnetbleches umfassend folgende Schritte,
a) Aufbringen einer ersten Druckpaste 22 mittels Schablonendruck 30 durch eine Schablone 26 auf ein Substrat 28,
b) Aufbringen einer zweiten Druckpaste 24 auf das Substrat 28, so dass die beiden Druckpasten 22, 24 nebeneinander vorliegen und eine diskrete Grenzlinie 32 bilden und eine erste Materiallage 4 ausbilden
c) Trocknen der ersten Materiallage 4
d) Verdrehen der Ausrichtung des Substrates 28 und/oder der Schablone 26 bezüglich einer Lotachse 34 zum Substrat 28 um einen Winkel α,
e) Aufbringen einer zweiten Materiallage 6 nach den Schritten a) bis c),
f) Sintern eines durch die Schritte a) bis e) erzeugten Grünkörpers 36 zu einem Magnetblech.
